# NEW EUROPEAN PATENT SPECIFICATION

(11) **EP 0 307 028 B2**
(45) Date of publication and mention of the opposition decision: **29.10.1997**
(45) Mention of the grant of the patent: 03.02.1993
(21) Application number: 88201810.4
(22) Date of filing: 25.08.1988
(51) Int. Cl.: F16C 9/04, F16C 9/02

(54) **Bearings**
Lager
Paliers

(30) Priority: 05.09.1987 GB 8720915
(43) Date of publication of application: 15.03.1989
(73) Proprietor: GLACIER VANDERVELL SA, 74000 Annecy (FR)
(72) Inventor: Gojon, Roger Leon, F-74000 Annecy (FR)
(74) Representative: Crux, John Anthony T&N plc, Group Patent Department

(56) References cited:
- EP-A- 0 128 746
- DE-A- 1 525 284
- DE-A- 2 711 983
- DE-A- 2 723 585
- FR-A- 2 555 264
- US-A- 3 314 305
- SAE830308 "Aluminum Alloy Bearings Containing Hard Particles Fitted For Use with Nodular Cast Iron Shaf", Feb.1983.

## Description

The present invention relates to bearings and particularly to bearings for internal combustion engines.

Bearings for the crankshaft main and connecting rod large-end journals generally comprise two halves. Each half usually comprises a steel-backed bearing material which may also have deposited thereon a thin layer of a second bearing material. The second material, often referred to as an overlay, is usually electro-deposited and comprises a soft lead- or tin-based alloy.

Such overlay coatings are usually employed in highly rated engines to improve the fatigue and seizure resistance of the bearing. They also serve on some underlying bearing materials to prevent corrosion thereof.

Owing to the higher cost of overlay plated bearings their use is really only justified in the half where the loads are highest and hence the oil film is thinnest. The loads on the other half-bearing are much lower and mainly due to inertia loads rather than firing loads. Such loads do not lead to either seizure conditions or to fatigue damage.

A bearing comprising two dissimilar halves is described in French Patent Specification No FR-A-2555264 and also in German Offenlegungsschrift No DE-A-2723585. As described in the latter publication, for a connecting rod large-end journal the upper half of the bearing, adjacent the connecting rod, is subject to the greatest load whereas for a main journal it is the lower half of the bearing, adjacent the bearing cap, which is subject to the greatest load.

It is known to use a silicon-containing alloy in that half of a bearing which sustains least bearing load, and a conventional overlay coating in that half of the bearing which sustains greatest bearing load.

Although overlay coatings improve the performance of the bearing, the alloys used, being soft, tend to wear rapidly when in contact with the crankshaft. Once the overlay has been worn through both seizure and possibly corrosion-resistance are deleteriously affected.

Merely increasing the thickness of the overlay to give greater wear capacity is limited due to fatigue resistance being reduced by the greater thickness.

Wear with a newly-machined crankshaft is caused by the relatively high roughness of the much harder ferrous crankshaft journal. The roughness of the crankshaft journal is not diminished by contact with the overlay material.

It has been noted, however, that once the overlay has been worn through and the journal comes into contact with the harder underlying bearing material, the crankshaft roughness is rapidly reduced.

It has also been noted that if such worn bearings are replaced with new overlay plated bearings the wear rate of the new bearing overlay is very much reduced. Clearly the stripping down of an engine and replacing bearings is undesirable and impracticable as a means of getting extended life out of one (the subsequent) set of bearings.

Such effect has also been noted and studied as reported in a paper by Fukuoka, Kato and Kamiya excerpted from Studies of Engine Bearings and Lubrication SP-539 published by the Society of Automotive Engineers, February 1983, entitled "Aluminium Alloy Bearings Containing Hard Particles Fitted for Use with Nodular Cast Iron Shaft".

This paper describes a shaft journal bearing in which all of the running surfaces comprise an aluminium based alloy containing inter alia particles of silicon, the effect thereof being said to be an abrasive polishing of the shaft journal after which the running surfaces work in a conventional manner and appear to offer improvement over conventional running surfaces, whether ones having an additional overlay coating or not.

This accords with the observed characteristic of the deleterious effect of shaft journal surface roughness. However there is some reluctance amongst engineers to abandon the known and well understood bearing types having overlay layers in favour of a new material.

According to the present invention a journal bearing of the kind comprising two half bearings disposed to surround a shaft journal, and each having dissimilar running surfaces, wherein one half bearing, in that position relative to the shaft which sustains greatest bearing load, is provided with an overlay coating as running surface and the other half bearing, in the position relative to the shaft that sustains least bearing load, has a running surface comprising a silicon-containing alloy operable to effect, by running movement of the shaft relative thereto, an abrasive polishing of the shaft journal and reduce the wear rate of overlay material of said one half bearing by the shaft journal, is characterised in that the running surface of the other, or non-overlay, half bearing is profiled into a series of cusps and pockets in the direction of running movement of the shaft relative to the bearing surface, the cusps operating initially to locally reduce bearing oil film thickness thereat and favour contact between the running surface of the bearing half and the shaft journal and causing both polishing of the shaft by the running surface and erosion of the cusps of the bearing running surface by the shaft to restore an oil film clearance between half bearing and shaft journal for subsequent running.

It has been found that aluminium based bearing alloys containing silicon are particularly advantageous for use in the non-overlay coated half. One such composition is of wt%:- 11 tin; 4 silicon; 2 copper; balance aluminium.

Although, as the authors of the aforementioned Society of Automotive Engineers paper have found, a conventionally circular bearing running surface does give a shaft polishing effect, it has also been found to be particularly advantageous to profile the bore of the other, or non-overlay- coated, half so as to reduce the hydrodynamic lift capacity of the half-bearing for an initial period by providing its running surface with small deviations from semi-circularity as a series of cusps and pockets in the direction of running movement of the shaft relative to the bearing surface, the cusps operating initially to locally reduce bearing oil film thickness thereat and favour abrasive contact between the running surface of the bearing half and the shaft journal and causing both polishing of - the shaft by the running surface and erosion of the cusps of the bearing running surface by the shaft to restore an oil film clearance between half bearing and shaft journal for subsequent running.

The pockets and cusps may be spaced 5 to 15mm apart and a depth of 1 to 5 micrometres deviation from a true cylinder. The effect of such a profile is to reduce the oil film thickness and initially favour contact between the shaft and parts of the surface of the non-overlay plated half. After a relatively short period of engine running the cusps are themselves worn away to produce a near perfect semicylindrical shape allowing maximum oil film thickness to be attained. At this stage the shaft journal roughness has been polished to a lower, less abrasive level. The deviations from semi-circularity may take many forms such as lobes having stepped or sinusoidal profile for example.

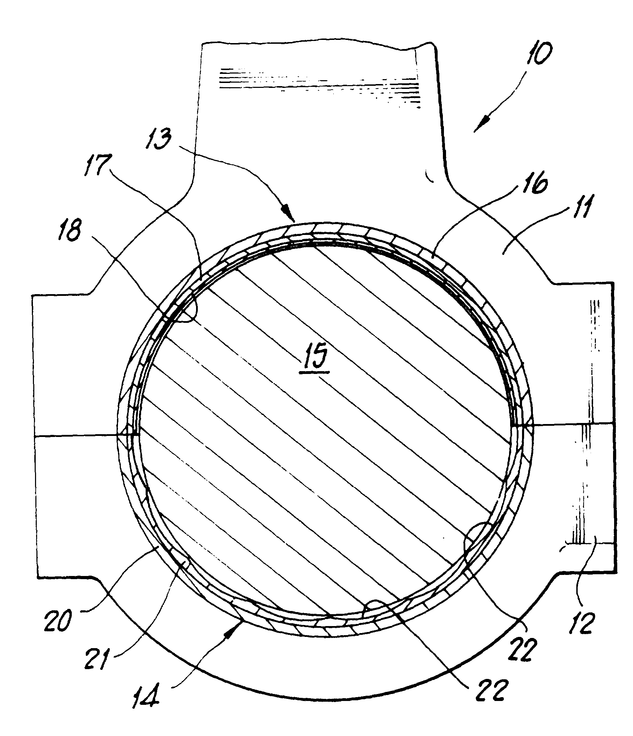

In order that the present invention may be more fully understood an example will now be described by way of illustration only with reference to the accompanying drawing which shows a diagrammatic section in elevation through a connecting rod big-end journal bearing.

Referring now to the drawing and where a connecting rod big-end journal bearing assembly is shown generally at 10. The assembly comprises a connecting rod portion 11 and cap 12, one, upper, bearing half 13 and the other, lower, bearing half 14. The shaft journal is shown at 15. The upper half 13 comprises a steel backing 16, a bearing lining 17 comprising a copper-lead alloy and an overlay coating 18 comprising lead-10 tin (all compositions are in weight %) having a thickness of about 25 micrometres. The lower half 14 also comprises a steel backing 20 having a lining of a bearing alloy 21 having a composition aluminium-11 tin-4 silicon-2 copper. The surface of the alloy 21 is also profiled into a series of pockets and cusps 22 and having a reptition wavelength of about 10 mm and a depth of 2 micrometres.

In operation the effect of the pockets and cusps 22 is to reduce the oil film thickness on the half 14 and allow contact between the cusp peaks and the shaft journal surface thus accelerating the polishing thereof. Simultaneously the cusp peaks are themselves worn away to leave a smooth profile on the half 14 thus restoring the desired oil film thickness and ensuring long service life.

Many other alloys may be used for the various bearing materials specified above and the invention should not be considered as being limited to such.

## Claims

1. A journal bearing of the kind comprising two half bearings (13, 14) disposed to surround a shaft journal (15), and each having dissimilar running surfaces, wherein one half bearing (13), in that position relative to the shaft which sustains greatest bearing load, is provided with an overlay coating (18) as running surface and the other half bearing (14), in the position relative to the shaft that sustains least bearing load, has a running surface (21) comprising a silicon-containing alloy operable to effect, by running movement of the shaft relative thereto, an abrasive polishing of the shaft journal and reduce the wear rate of overlay material of said one half bearing (13) by the shaft journal (15), characterised in that the running surface (21) of the other, or non-overlay, half bearing is profiled into a series of cusps and pockets (21, 22) in the direction of running movement of the shaft relative to the bearing surface, the cusps operating initially to locally reduce bearing oil film thickness thereat and favour contact between the running surface of the bearing half and the shaft journal and causing both polishing of the shaft by the running surface and erosion of the cusps of the bearing running surface by the shaft to restore an oil film clearance between half bearing and shaft journal for subsequent running.

2. A journal bearing as claimed in claim 1 characterised by a composition of the running surface (21) of said other, or non-overlay, half bearing of wt%:- 11 tin; 4 silicon; 2 copper; balance aluminium.

3. A journal bearing as claimed in claim 1 or claim 2 characterised in that the running surface (21) of the other, or non-overlay, half bearing is profiled into cusps and pockets constituted by a series of lobes having a stepped or sinusoidal profile in the direction of running movement of the shaft relative to the bearing surface, the lobes operating initially to locally reduce bearing oil film thickness thereat and favour contact between the running surface of the bearing half and the shaft journal and causing both polishing of the shaft by the running surface and erosion of the lobes of the bearing running surface by the shaft to restore an oil film clearance between half bearing and shaft journal for subsequent running.

4. A journal bearing as claimed in claim 3 characterised in that the wavelength of repetition of the lobes is from 5 to 15mm and depth of low points relative to high is initially from 1 to 5 micrometres.

## Patentansprüche

1. Wellenlager, umfassend zwei Halblager (13, 14), die so angeordnet sind, daß sie einen Wellenzapfen (15) umgeben, und wovon jedes unterschiedliche Laufoberflächen hat, wobei ein Halblager (13) in der Lage relativ zur Welle, welche die größte Lagerbelastung aushält, mit einem Auflagenüberzug (18) als Laufoberfläche versehen ist und das andere Halblager (14) in der Lage relativ zur Welle, welche die geringste Belastung aushält, eine Laufoberfläche (21) hat, welche eine siliziumhaltige Legierung aufweist, die dazu geeignet ist, durch die Laufbewegung der Welle relativ dazu, ein Schleifpolieren des Wellenzapfens zu bewirken und die Abnutzungsgeschwindigkeit von Auflagenmaterial dieses einen Halblagers (13) durch den Wellenzapfen (15) zu vermindern, dadurch gekennzeichnet, daß die Laufoberfläche (21) des anderen, oder nicht mit einer Auflage versehenen Halblagers in einer Reihe von Spitzen und Taschen (21, 22) in Richtung der Laufbewegung der Welle relativ zu der Laufoberfläche profiliert ist, wobei die Spitzen anfänglich bewirken, daß die Ölfilmdicke des Lagers dort lokal vermindert wird und der Kontakt zwischen der Laufoberfläche der Lagerhälfte und dem Wellenzapfen begünstigt wird und sowohl das Polieren der Welle durch die Laufoberfläche als auch die Erosion der Spitzen der Lagerlaufoberfläche durch die Welle bewirkt wird, um einen Ölfilmspalt zwischen dem Halblager und dem Wellenzapfen für das anschließende Laufen wiederherzustellen.

2. Wellenlager nach Anspruch 1, gekennzeichnet durch folgende Zusammensetzung der Laufoberfläche (21) des anderen, oder nicht mit einer Auflage versehenen Halblagers in Gew.-%:- 11 Zinn; 4 Silizium; 2 Kupfer; Rest Aluminium.

3. Wellenlager nach Anspruch 1 oder 2, dadurch gekennzeichnet, daß die Laufoberfläche (21) des anderen, oder nicht mit einer Auflage versehenen Halblagers in Spitzen und Taschen, die durch eine Reihe von Nocken mit gestuftem oder sinusförmigem Profil in Richtung der Laufbewegung der Welle relativ zur Lageroberfläche aufgebaut sind, profiliert ist, wobei die Nocken anfänglich eine lokale Verminderung der Lagerölfilmdicke dort hervorrufen und den Kontakt zwischen der Laufoberfläche der Lagerhälfte und dem Wellenzapfen begünstigen und sowohl das Polieren der Welle durch die Laufoberfläche als auch die Erosion der Nocken der Lagerlauffläche durch die Welle bewirken, um einen Ölfilmspalt zwischen dem Halblager und dem Wellenzapfen für das anschließende Laufen wiederherzustellen.

4. Wellenlager nach Anspruch 3, dadurch gekennzeichnet, daß die Wiederholungswellenlänge der Nocken 5 bis 15 mm und die Tiefe der niedrigen Punkte relativ zur Höhe anfänglich 1 bis 5 Mikrometer beträgt.

## Revendications

1. Palier de tourillon du genre comprenant deux moitiés (13, 14) disposées de manière à entourer un tourillon (5), et comportant chacune des surfaces de glissement différentes, dans lequel une moitié (13), dans la position par rapport à l'arbre qui supporte la plus grande charge, est pourvue d'un revêtement de recouvrement (18) comme surface de glissement et l'autre moitié (14), dans la position par rapport à l'arbre qui supporte la moins grande charge, présente une surface de glissement (21) comprenant un alliage contenant du silicium servant, par glissement de l'arbre par rapport à elle, à polir par abrasion le tourillon afin de diminuer le taux d'usure du matériau de recouvrement, de ladite moitié (13) par le tourillon (15), caractérisé en ce que la surface de glissement (21) de l'autre moitié, non dotée d'un revêtement de recouvrement, est profilée en une série de sommets de rebroussement et poches (21, 22) dans la direction du glissement de l'arbre relativement à la surface du palier, les sommets de rebroussement servant initialement à réduire localement l'épaisseur du film d'huile et à favoriser le contact entre la surface de glissement de la moitié de palier et le tourillon et entraînant à la fois un polissage de l'arbre par la surface de glissement et une érosion des sommets de rebroussement de la surface de glissement du palier par l'arbre pour restaurer un jeu de film d'huile entre la moitié et le tourillon pour le glissement ultérieur.

2. Palier de tourillon selon la revendication 1, caractérisé par une composition de la surface de glissement (21) de ladite autre moitié, non dotée d'un revêtement de recouvrement, de 11 % en poids d'étain, 4 % en poids de silicium, 2 % en poids de cuivre, le reste étant de l'aluminium.

3. Palier de tourillon selon la revendication 1 ou 2, caractérisé en ce que la surface de glissement (21) de l'autre moitié, non dotée d'un revêtement de recouvrement, est profilée en sommets de rebroussement et poches constitués par une série de lobes au profil étagé ou sinusoïdal dans la direction du glissement de l'arbre relativement à la surface du palier, les lobes servant initialement à réduire localement l'épaisseur du film d'huile et à favoriser le contact entre la surface de glissement de la moitié de palier et le tourillon et entraînant à la fois un polissage de l'arbre par la surface de glissement et une érosion des lobes de la surface de glissement du palier par l'arbre pour restaurer un jeu de film d'huile entre la moitié et le tourillon pour le glissement ultérieur.

4. Palier de tourillon selon la revendication 3, caractérisé en ce que la longueur d'onde de répétition des lobes est comprise entre 5 et 15 mm et la profondeur des points bas par rapport aux points élevés est initialement comprise entre 1 et 5 micromètres.
